# EUROPÄISCHE PATENTANMELDUNG

(11) **EP 1 327 864 A1**
(43) Veröffentlichungstag der Anmeldung: **16.07.2003**
(21) Anmeldenummer: 02405009.8
(22) Anmeldetag: 10.01.2002
(51) Int. Cl.: G01F 1/688

(54) **Piezoelektrischer Durchflusssensor**

(71) Anmelder: ABB RESEARCH LTD., 8050 Zürich (CH)
(72) Erfinder: Matter, Daniel, 5200 Brugg (CH); Haffner, Ken Yves, 5400 Baden (CH); Rueegg, Walter, 5304 Endingen (CH)
(74) Vertreter: ABB Patent Attorneys

(57) **Zusammenfassung**

Ein Durchflusssensor für ein Durchflussmessgerät zur Messung des Massenflusses eines strömenden Fluids (6), insbesondere für ein Gasmeter oder Wassermeter, weist einen Grundkörper (1) aus einem piezoelektrischen Material und ein elektrisches Heizelement (3) auf. Das elektrische Heizelement (3) wird in gut wärmeleitenden Kontakt mit dem zu messenden Fluid (6) gebracht und das durchflussabhängige Aufheiz- und/oder Abkühlverhalten des Heizelementes (3) wird gemessen, indem über eine thermisch bedingte mechanische Deformation des Grundkörpers (1) eine elektrische Spannung erzeugt wird.

## Beschreibung

### Technisches Gebiet

Die Erfindung betrifft einen Durchflusssensor gemäss Oberbegriff des Patentanspruches 1 und ein Verfahren zur Messung eines Massenflusses gemäss Oberbegriff des Patentanspruches 9. Der Sensor eignet sich insbesondere zur Bestimmung des Durchflusses von Gas, beispielsweise Erdgas, oder von Wasser in Kleinbetrieben und im Haushaltsbereich.

### Stand der Technik

Klassische Prinzipien der Durchflussmessung von Fluiden basieren auf mechanischen Durchflussmessungen unter Verwendung von Blenden, Venturimetern und Rotametern. Jede dieser Messtechniken basiert auf Beziehungen zwischen Druck, Höhe und Geschwindigkeit, die durch die Bernoullische Gleichung erfasst sind. Obwohl diese Messvorgänge relativ alt sind, werden sie auch heute noch sehr häufig angewandt.

Ferner existieren seit einigen Jahren elektronische Durchflussmessgeräte, welche Ultraschall-Laufzeiten oder Corioliskräfte bestimmen. Beide verfügen oft über Sensoren mit piezoelektrischen Kristallen. Bei den Ultraschall-Messgeräten dient der Piezokristall zur Detektion der Ultraschallwelle. Bei den sogenannten Vortex-Durchflussmessgeräten werden entstehende Corioliskräfte in eine mechanische Veränderung des Piezokristalls umgesetzt. Derartige piezoelektrische Sensoren haben den Vorteil, dass sie äussert sensitiv sind. Der Aufbau der obengenannten elektronischen Messgeräte ist jedoch relativ kompliziert und sie sind entsprechend teuer.

Des weiteren sind elektronische Messgeräte bekannt, welche das Aufheiz- und/oder Abkühlverhalten des strömenden Fluids beziehungsweise eines mit ihm in wärmeleitendem Kontakt stehenden Heizelementes verfolgen. Durch diese sogenannten thermischen Messgeräte lässt sich auf relativ einfache Art und Weise ein Massenfluss bestimmen. Die Messung eines Massenflusses hat gegenüber einer Volumenmessung den Vorteil, dass sie von der Gastemperatur unabhängig ist. Soll der Sensor zur Bestimmung eines Gasverbrauches zwecks späterer Verrechnung eingesetzt werden, so ermöglicht die Massenflussmessung eine faire Verrechnung.

### Darstellung der Erfindung

Es ist deshalb Aufgabe der Erfindung, einen Durchflusssensor zu schaffen, welcher einfach aufgebaut ist und einen Massenfluss bestimmt.

Diese Aufgabe löst ein Durchflusssensor mit den Merkmalen des Patentanspruches 1.

Es ist ferner eine Aufgabe der Erfindung, ein Verfahren zur Messung eines Massenflusses zu schaffen, welches mit einfachen Mitteln durchführbar ist und doch eine genügende Sensitivität oder Messempfindlichkeit aufweist.

Diese Aufgabe löst ein Verfahren mit den Merkmalen des Patentanspruches 9.

Der erfindungsgemässe Durchflusssensor kombiniert zur Messung des Massenflusses eines Fluids einen piezoelektrischen Grundkörper mit einem elektrischen Heizelement. Die Aufheizung und/oder die Abkühlung des Heizelementes oder des Fluids erzeugt im Grundkörper eine mechanische Deformation, welche in eine elektrische Spannung umgesetzt wird.

Piezoelektrische Sensoren können Temperaturänderungen im Bereich von einigen 10⁻³ ° Celsius detektieren. Dadurch ist der Durchflusssensor äusserst temperatursensitiv. Da der Sensor im wesentlichen lediglich aus mindestens einem Heizelement und einem piezoelektrischen Grundkörper besteht, ist er relativ einfach und kostengünstig aufgebaut.

Weitere vorteilhafte Varianten des Verfahrens und vorteilhafte Ausführungsformen gehen aus den abhängigen Patentansprüchen hervor.

### Kurze Beschreibung der Zeichnung

Im folgenden wird der Erfindungsgegenstand anhand eines bevorzugten Ausführungsbeispieles, welches in der beiliegenden Zeichnung dargestellt ist, erläutert. Es zeigen:
- Figur 1: eine schematische Darstellung eines erfindungsgemässen Durchflusssensors, angeordnet in einem Gasrohr oder Wasserrohr;
- Figur 2a: eine Graphik eines zeitlichen Verlaufes eines Heizpulses und
- Figur 2b: eine Graphik eines zeitlichen Verlaufes der Temperatur eines Heizelementes.

### Wege zur Ausführung der Erfindung

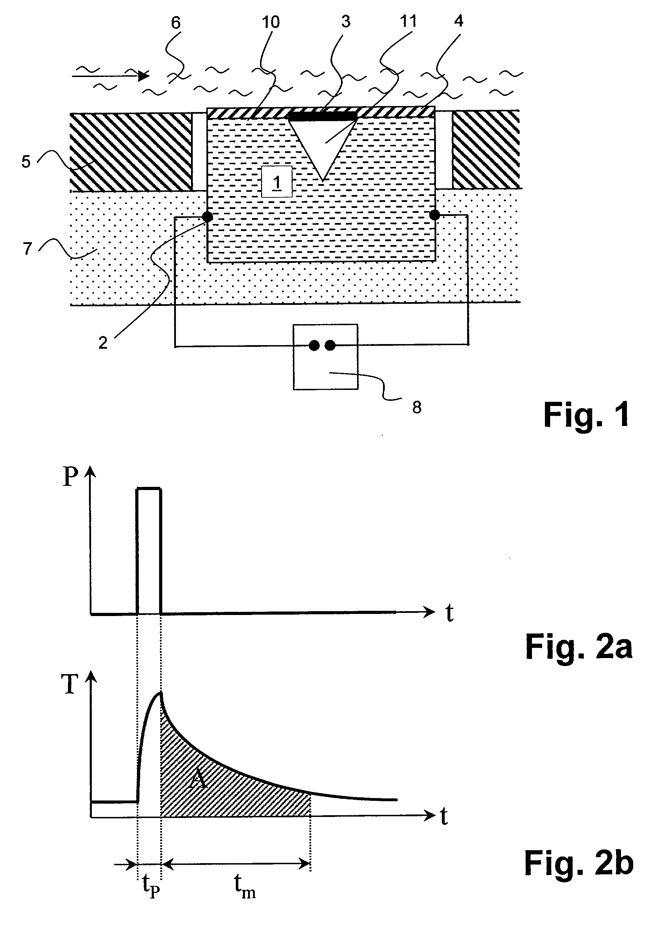

In Figur 1 ist ein bevorzugtes Ausführungsbeispiel eines erfindungsgemässen Durchflusssensors dargestellt. Der Sensor weist einen Grundkörper 1 aus einem piezoelektrischen Kristall auf, welcher in einer Rohrwandung 5 eines von einem Fluid 6 durchströmten Rohres angeordnet ist. Die Rohrwandung 5 ist nach aussen mit einer thermischen Isolationsschicht 7 umgeben. Auf zwei gegenüberliegenden Seiten des Grundkörpers 1 sind elektrische Anschlüsse 2 angebracht, welche mit einer Steuer- und Auswerteelektronik 8 eines Durchflussmessgerätes verbunden sind. Das Durchflussmessgerät ist beispielsweise ein Gasmeter oder ein Wassermeter. Der Grundkörper 1 weist vorzugsweise eine Ausnehmung 11 auf. Vorzugsweise ist diese keilförmig mit einem dreieckigen Querschnitt ausgestaltet. Derartige Formen von piezoelektrischen Kristallen werden als Temperatursensoren in Alarmanlagen eingesetzt.

Der Sensor umfasst ferner mindestens ein elektrisches Heizelement 3, welches ebenfalls mit der Steuer- und Auswerteelektronik 8 verbunden ist. Die entsprechenden elektrischen Leitungen sind hier jedoch zur Vereinfachung der Figur nicht eingetragen. Als Heizelement 3 eignet sich beispielsweise eine Heizfolie oder ein Dünnfilm-Platin-Heizer. Das Heizelement 3 ist so angeordnet, dass es sich im gut wärmeleitenden Kontakt mit dem vorbeiströmendem Fluid 6 befindet. Im hier dargestellten Beispiel ist das Heizelement 3 auf dem Grundkörper 1 angeordnet, wobei es sich auf einer dem Fluid 6 zugewandten Stirnfläche 10 des Grundkörpers 1 befindet. Weist der Grundkörper 1 die Ausnehmung 11 auf, so ist das Heizelement 3 über oder in diesem angeordnet.

Der Grundkörper 1 ist auf seiner dem Fluid 6 zugewandten Seite, der Stirnfläche 10, mit einer wärmeleitenden Schutzschicht 4 versehen, welche mindestens das Heizelement 3 und die Ausnehmung 11, vorzugsweise jedoch die ganze Stirnfläche 11 des Grundkörpers 1 überdeckt. Sie dient als Schutz vor chemischer und mechanischer Beschädigung des Sensors durch das Fluid 6.

Wie in Figur 2a dargestellt und wie bei thermischen Durchflusssensoren üblich wird an das Heizelement 3 während der Zeit tp ein Heizpuls P angelegt. Das Heizelement 3 wird dadurch erwärmt und kühlt wieder ab, wobei die Abkühlung vom Massendurchfluss des vorbeiströmenden Fluids 6 abhängt. Ein derartiger Temperaturverlauf T ist in der Figur 2b dargestellt. Gemessen wird die Zeit tₘ respektive die Fläche A. Erfindungsgemäss wird dieses Aufheizund/oder Abkühlverhalten des Heizelementes 3 gemessen, indem die Aufheizung und/oder Abkühlung in eine thermisch mechanische Veränderung des Grundkörpers 1, z. B. eine Dilatation, Kontraktion oder Deformation, umgesetzt wird, welche wiederum eine elektrische Spannung erzeugt. Diese Spannung wird über die elektrischen Anschlüsse 2 von der Steuer- und Auswerteelektronik 8 erfasst. Hierfür ist das Heizelement 3 so mit dem Grundkörper 1 wirkverbunden, dass eine durchflussabhängige Aufheizung und/oder Abkühlung des Heizelementes 3 eine mechanische Deformation des Grundkörpers 1 und damit eine elektrische Spannungsveränderung zur Folge hat.

Der Grundkörper 1 weist eine erhöhte Sensitivität oder Deformationsempfindlichkeit aus, wenn er, wie in Figur 1 dargestellt, die bereits erwähnte Ausnehmung 11 aufweist. Ist das Heizelement 3 direkt darüber angeordnet, so führt die in die Ausnehmung 11 abgestrahlte Wärmestrahlung des Heizelementes 3 zu einer Temperaturänderung im piezoelektrischen Kristall und somit zu einer Verformung des Grundkörpers 1. Andere Formen von Ausnehmungen sind jedoch möglich. Es ist auch möglich, das Heizelement 3 beabstandet zum Grundkörper 1 anzuordnen.

Ferner ist es möglich, dass das Heizelement 3 so mit dem Grundkörper 1 verbunden ist, dass die temperaturbedingte Grössenänderung des Heizelementes 3 oder eines Transducers mechanisch auf den Grundkörper 1 einwirkt und so eine elektrische Spannung erzeugt. Beispielsweise lässt sich das Heizelement 3 in der Ausnehmung 11 einklemmen, so dass eine wärmebedingte Ausdehnung des Heizelementes 3 die Ausnehmung 11 spreizt.

Es ist auch möglich, das Fluid 6 mittels des Heizelementes 3 aufzuheizen und die Aufheizung beziehungsweise die Abkühlung des Fluids 6 zu detektieren. Hierfür muss der Grundkörper 1 in wärmeleitender Verbindung mit dem Fluid 6 stehen.

Der erfindungsgemässe Durchflusssensor und das erfindungsgemässe Verfahren ermöglichen eine Kombination der Vorteile einer thermischen Messung mit denjenigen eines piezoelektrischen Sensors.

### Bezugszeichenliste

- 1: piezoelektrischer Grundkörper
- 10: Stirnfläche
- 11: Ausnehmung
- 2: elektrische Anschlüsse
- 3: elektrisches Heizelement
- 4: wärmeleitende Schutzschicht
- 5: Rohrwandung
- 6: Fluid
- 7: thermische Isolationsschicht
- 8: Steuer- und Auswerteelektronik

## Patentansprüche

1. Durchflusssensor für ein Durchflussmessgerät zur Messung des Massenflusses eines strömenden Fluids (6), wobei der Sensor einen Grundkörper (1) aus einem piezoelektrischen Material aufweist, **dadurch gekennzeichnet, dass** der Sensor ein elektrisches Heizelement (3) aufweist, welches in wärmeleitenden Kontakt mit dem zu messenden Fluid (6) bringbar ist, und dass eine durchflussabhängige Aufheizung und/oder Abkühlung des Heizelementes (3) oder des Fluids (6) über eine mechanische Deformation des Grundkörpers (1) eine elektrische Spannung erzeugt.

2. Durchflusssensor nach Anspruch 1, **dadurch gekennzeichnet, dass** das Heizelement (3) auf dem Grundkörper (1) aufgebracht ist.

3. Durchflusssensor nach Anspruch 1, **dadurch gekennzeichnet, dass** das Heizelement (3) beabstandet zum Grundkörper (1) angeordnet ist.

4. Durchflusssensor nach einem der vorangehenden Ansprüche, **dadurch gekennzeichnet, dass** das Heizelement (3) eine Heizfolie ist.

5. Durchflusssensor nach einem der vorangehenden Ansprüche, **dadurch gekennzeichnet, dass** der Grundkörper (1) eine Ausnehmung (11) aufweist.

6. Durchflusssensor nach Anspruch 5, **dadurch gekennzeichnet, dass** die Ausnehmung (11) keilförmig mit einem dreieckförmigen Querschnitt ausgebildet ist.

7. Durchflusssensor nach einem der Ansprüche 5-6, **dadurch gekennzeichnet, dass** das Heizelement (3) über der Ausnehmung (11) angeordnet ist.

8. Durchflusssensor nach einem der vorangehenden Ansprüche, **dadurch gekennzeichnet, dass** der Grundkörper (1) auf einer dem zu messenden Fluid (6) zugewandten Seite (10) mit einer wärmeleitenden Schutzschicht (4) versehen ist, welche mindestens das Heizelement (3) und gegebenenfalls eine optional vorhandene Ausnehmung (11) im Grundkörper (1) überdeckt.

9. Verfahren zur Messung eines Masseflusses eines strömenden Fluids (6) mittels eines Durchflussmessgerätes mit einem Sensor, welcher eine piezoelektrischen Grundkörper (1) aufweist, **dadurch gekennzeichnet, dass** ein elektrisches Heizelement (3) verwendet wird, welches in wärmeleitenden Kontakt mit dem zu messenden Fluid (6) gebracht wird und dass das Aufheizund/oder Abkühlverhalten des Heizelementes (3) oder des Fluids (6) mittels des piezoelektrischen Grundkörpers (1) gemessen wird, indem die Aufheizung und/oder Abkühlung über eine mechanische Deformation des piezoelektrischen Grundkörpers (1) eine elektrische Spannung erzeugt.

10. Verfahren nach Anspruch 9, **dadurch gekennzeichnet, dass** die mechanische Deformation mittels Temperaturänderung des Grundkörpers (1) und/oder mittels temperaturbedingter Grössenänderung des Heizelementes (3) erzeugt wird.
